# EUROPÄISCHE PATENTSCHRIFT

(11) **EP 0 592 782 B1**
(45) Veröffentlichungstag und Bekanntmachung des Hinweises auf die Patenterteilung: **18.09.1996**
(21) Anmeldenummer: 93112557.9
(22) Anmeldetag: 05.08.1993
(51) Int. Cl.: H02G 15/22, G02B 6/44

(54) **Endverschluss für ein Druckkabel**
Termination for pressurized cable
Boîte d'extrémité pour câble sous pression

(30) Priorität: 10.10.1992 DE 4234265
(43) Veröffentlichungstag der Anmeldung: 20.04.1994
(73) Patentinhaber: Felten & Guilleaume Energietechnik AG, D-51058 Köln (DE)
(72) Erfinder: Hülsken, Georg, Dr.-Ing., D-47259 Duisburg (DE); Amerpohl, Uwe, Dipl.-Ing., D-51467 Bergisch Gladbach (DE); Harjes, Bernd, Dr.-Ing., D-51467 Bergisch Gladbach (DE); Grella, Werner, D-51065 Köln (DE)

(56) Entgegenhaltungen:
- EP-A- 0 274 228
- DE-A- 2 743 057
- DE-U- 8 113 501
- FR-A- 2 696 555
- GB-A- 2 153 159
- PATENT ABSTRACTS OF JAPAN vol. 17, no. 371 (E-1396) 13. Juli 1993 & JP-A-05 056 544

## Beschreibung

Die Erfindung betrifft einen Endverschluß für ein Druckkabel gemäß dem Oberbegriff des Anspruchs 1. Ein Endverschluß dieser Art ist aus DE-A-2743057 bekannt.

Für druckgasüberwachte Kabel sind einfache Garnituren bekannt (DE G 8113501), mit denen Leitungen aus dem Druckraum nach außen geführt werden können. Die bei diesen Kabeln benutzte Technik kann wegen ihrer Einfachheit nicht für höhere Drücke verwendet werden, weil in solchen Kabeln nur Drücke von wenigen bar herrschen.

Der Einsatz von Leitungen - insbesondere mit Lichtwellenleitern - beispielsweise in Gasaußendruckkabeln ist wegen der Besonderheit und des erhöhten Aufwands an Drucktechnologie bisher noch nicht vorgeschlagen worden.

Der Erfindung liegt die Aufgabe zugrunde, einen Endverschluß für ein Druckkabel anzugeben, mit dem mindestens eine im Energiekabel liegende Leitung sicher gegen Gas- oder Ölaustritt oder Druckverlust, mit hoher elektrischer Sicherheit und bei geschützter Unterbringung der Leitung und/oder der Adern herausführbar ist.

Die Aufgabe wird mit den Merkmalen des Hauptanspruchs gelöst. Vorteilhafte Weiterbildungen finden sich in den Unteransprüchen.

Der Endverschluß für ein Druckkabel - insbesondere für mehradrige Energiekabel - mit Druckführungsrohr und Aufteilungsgehäuse und Öl oder Gas als Druckmedium wird eingesetzt, um mindestens eine in Druckkabeln liegende elektrische oder optische Leitung herauszuführen. Er zeichnet sich dadurch aus, daß das Aufteilungsgehäuse mit einem Stutzen zur Befestigung von Leitungsdurchführungen versehen ist, daß außerhalb der erstgenannten Leitungsdurchführungen eine als Drucksicherungsraum bezeichnete Kammer vorhanden ist, in deren Wandung mindestens eine zweite Leitungsdurchführung für im Kabel mitgeführte Leitungen vorhanden ist und daß der Stutzen, die Wandung des Drucksicherungsraums und die zweiten Leitungsdurchführungen druckfest und dicht gegen Durchtritt des Druckmediums sind.

Der Endverschluß ist für Öldruck- als auch für Gasaußendruckkabel gleichermaßen einsetzbar. Eine besondere Ausführungsform des Endverschlusses wird für optische Nachrichtenleitungen mit Lichtwellenleitern vorgeschlagen. Eine vereinfachte Ausführung des Endverschlusses ist auch für Schwachstromkabel einsetzbar.

Das Aufteilungsgehäuse des Druckführungsrohrs ist mit einem Stutzen zur Befestigung einer Leitungsdurchführung für mindestens eine im Druckkabel geführte Leitung, insbesondere Nachrichtenleitung, versehen. Die Leitungsdurchführung schließt gegen das Druckmedium dicht ab.

Die Wandung des Drucksicherungsraums ist druckfest und die Leitungen sind dicht gegen das Druckmedium durch die zweite Leitungsdurchführung geführt. Der Drucksicherungsraum kann bei Leckage Druckmedium aus dem Aufteilungsgehäuse aufnehmen, ohne daß die Gefahr besteht, daß der Endverschluß Druck oder Öl verliert.

Vor oder hinter der ersten Leitungsdurchführung wird ein als Aufspannraum definierter Raum für die Unterbringung einer Mehrlänge der Leitung aufgespannt. In einer Ausgestaltung des Endverschlusses wird gemeinsam mit dem Drucksicherungsraum zwischen beiden Leitungsdurchführungen eine Aufspannkammer für die
- vorzugsweise lose - Unterbringung einer Mehr länge der Leitung ausgebildet.

Die Leitung kann fest (gelötet oder geklebt) durch eine das Aufteilungsgehäuse abschließende Abschlußplatte geführt sein. Vorzugsweise wird die Leitung durch eine als Kolbendichtung oder Stopfbuchse ausgebildete Leitungsdurchführung geführt. Hierbei ist ein einfacher Ein- oder Ausbau der Einzelteile möglich.

Die druckdichte erste Leitungsdurchführung ist einstückig mit der Abschlußplatte bzw. dem Stutzen ausgebildet oder sie wird am Aufteilungsgehäuse auswechselbar befestigt.

Für den Fall, daß die Nachrichtenleitung mit einem Schutzmantel versehen ist, wird vorgeschlagen, die vom Schutzmantel befreiten Adern durch die zweite Leitungsdurchführung hindurchzuführen und das Ende des Schutzmantels in der zweiten Leitungsdurchführung enden zu lassen.

In einer alternativen Ausgestaltung kann die zweite Leitungsdurchführung für das Durchführen und Haltern für von ihren Mänteln freigelegten Adern (insbesondere Lichtleitfasern) ausgebildet sein.

In einer besonderen Ausgestaltung wird vorgeschlagen, die zweite Leitungsdurchführung eingangsseitig zum Haltern einer gemantelten Leitung auszubilden und im ausgangsseitigen Teil der Leitungsdurchführung die freigelegten Adern gesondert zu fixieren. Die gemantelte Leitung wird durch eine Rundgummidichtung gehalten und abgedichtet. Ausgangsseitig ist die Leitungsdurchführung mit einem länglich, vorzugsweise axial ausgebildeten Raum versehen, der mit einer Masse zum Fixieren der vom Mantel freigelegten Adern, insbesondere Lichtleitfasern einer optischen Leitung, füllbar. Vor dem Füllen mit einer leichtflüssigen Füllmasse werden die Lichtleitfasern im vorzugsweise zylindrisch ausgebildeten Raum auseinander gespreizt. Als Füll- und Fixiermasse ist aushärtender Kunststoff (Gießharz, Epoxidharz, PU-Harz oder Silikonkautschuk) einsetzbar. Die zweite Leitungsdurchführung wird mit einer Kappe mit Öffnungen verschlossen, durch die die Adern hindurchtreten. Bei Wahl einer geeigneten Füllmasse und besonderer Gestaltung der Wandung des Füllraums ist es möglich, daß auch bei Undichtigkeit im Bereich der Rundgummidichtung oder des Leitungsmantels, die Druckdichtigkeit durch die Füllmasse ebenfalls sichergestellt werden kann.

Volumen und Geometrie der Aufspannkammer sind durch die Leitungsmehrlänge, durch die Baulänge der Leitungsdurchführungen und durch auf den Enden der Leitungsdurchführungen erforderlichen Sicherheitslängen der Leitung bestimmt. Daher sind Volumen und Geometrie vorzugsweise eine Minimalkonfiguration. Für optische Leitungen (mit Lichtwellenleitern) werden gewisse Überlängen benötigt, da die Lichtleitfasern der Leitung spannungsfrei gelagert werden müssen. Weiterhin ist wichtig, eine Mehrlänge von etwa 1 bis einigen Metern zu bevorraten, da die Mehrlänge für den Verbrauch an Lichtleitfasern für das Spleißen bzw. als Vorrat für eine spätere zweite Spleißung benötigt werden.

Die unteren Grenzen des Volumens sind durch den kleinstmöglichen Biegeradius der Leitung gegeben. Die Leitung wird ein kurzes Stück außerhalb der Leitungsdurchführung starr fixiert gerade geführt und geht dann in der Aufspannkammer mit einer bestimmten Krümmung in eine Schraube über. Insbesondere metallummantelte Lichtleitfaser-Leitungen verlangen sorgfältige Handhabung. Vorzugsweise wird daher die Aufspannkammer als Zylinder mit einem Innenraumradius nicht kleiner als der kleinstmögliche Biegeradius ausgebildet. Bei einer Wendelung der Leitung als Schraube mit Innenraumradius entsteht eine Stapelhöhe, die sich aus dem Produkt Dicke der Leitung und Windungszahl bestimmt. Die Länge der Leitung in einer Windung entspricht dem Innenumfang des Zylinders.

Der Drucksicherungsraum kann mit einem druck- oder stoffempfindlichen Meßelement (Drucksensor oder Gas- oder Ölsensor) abschließbar sein. Dieses Sensorelement kann in der Wandung des Drucksicherungsraums eingeschraubt sein.

Außerhalb der zweiten Leitungsdurchführung kann eine Kammer ("Spleißkammer") mit Mitteln zum Haltern für mindestens eine Ader der Leitung angeordnet sein. Insbesondere kann eine Spleißplatte für Lichtleitfasern einer optischen Leitung vorgesehen sein.

Die Adern der Leitung sind entweder einzeln oder gebündelt durch ein isolierendes Rohr aus der Spleißkammer nach außen führbar.

Die Spleißkammer außerhalb der zweiten Leitungsdurchführung einschließlich des Rohrs ist mit Rundgummidichtungen und einem leicht verschließbaren Deckel gegen Umwelteinflüsse (insbesondere gegen Feuchtigkeitszutritt) abgedichtet. Durch das Rohr sollte ebenfalls keine Feuchtigkeit hindurchtreten. Dies läßt sich erreichen, indem die Leitung im Rohr dicht eingebettet oder das Rohr gegen eine Haubenmuffe, in der das Rohr endet, abgedichtet ist. Darüberhinaus wird eine Ausgestaltung der Spleißkammer vorgeschlagen, die dicht ist gegen Durchtritt des Druckmediums. Das bedeutet, daß auch für den Fall des Durchtritts von Druckmedium in die Spleißkammer, aus der Spleißkammer kein Druckmedium entweichen kann.

Die Aufspannkammer, der Drucksicherungsraum und/oder die Spleißkammer können ganzmetallisch (vorzugsweise aus Aluminium) ausgebildet sein. In einer Ausgestaltung können Aufspannkammer, Drucksicherungsraum und/oder Spleißkammer aus Kunststoff hergestellt sein, wobei ihre Oberflächen durch metallische Beschichtung elektrisch leitend gemacht sind. Die Oberflächen sind elektrisch mit dem Potential oder Schutzpotential des Aufteilungsgehäuses verbindbar. Der kathodische Korrosionsschutz für das Druckführungsrohr des Druckkabels läßt sich dadurch auch auf alle Teile des Endverschlusses erstrecken.

Ein metallischer Mantel einer nach außen durchgeführten Leitung ist vermittels der zweiten Leitungsdurchführung mit dem Schutzpotential des Aufteilungsgehäuses verbindbar, so daß auch der Metallmantel eindeutig auf elektrischem Potential liegt. Durch die Verwendung einer Rundgummidichtung (O-Ring) ist die elektrische Kontaktgabe nicht ausreichend sichergestellt. Daher wird eine Verbindung zwischen dem Metallmantel der Leitung und den elektrisch leitenden Teilen von Aufspannkammer, Drucksicherungsraum oder Spleißkammer mit dem Aufteilungsgehäuse gesondert vorgesehen. Diese Verbindung kann aus einer metallischen Manschette bestehen, die um den Metallmantel der Leitunggelegt und leitend mit dem Schutzpotential des Aufteilungsgehäuses verbunden wird.

Als Alternative zur Ausbildung einer Spleißkammer außerhalb des Drucksicherungsraums zur Aufnahme der Haltemittel für die Adern wird vorgeschlagen, den Drucksicherungsraum selbst als Spleißkammer auszubilden. Der Drucksicherungsraum enthält also Mittel zum Haltern für mindestens eine Ader, insbesondere also eine Spleißplatte für Lichtleitfasern. Der Drucksicherungsraum hat ein relativ großes Volumen, welches durch die Leitung oder ihre Adern nur teilweise ausgefüllt wird. Das Volumen und die geometrischen Gegebenheiten werden nicht wesentlich verändert, wenn der Drucksicherungsraum auch als Spleißkammer ausgebildet wird.

Der Endverschluß wird in den Figuren für einen Einsatz in einem Gasdruckkabel näher beschrieben. Die Figuren zeigen im Einzelnen:

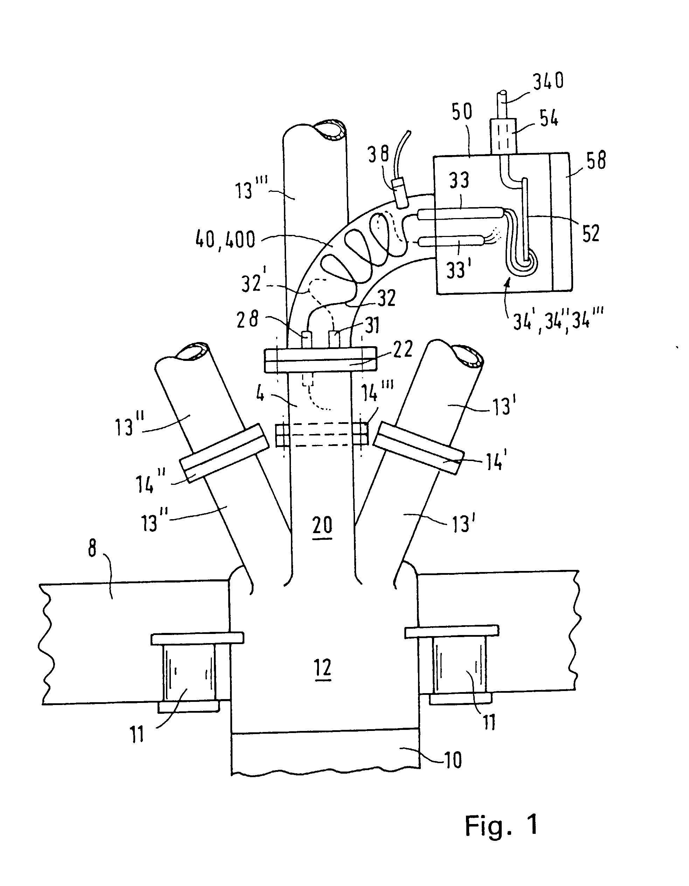

- **Fig.** 1: den Endverschluß,
- **Fig.** 2: die Innendichtung des Endverschlusses und die Aufspannkammer,
- **Fig.** 3: eine Kolbendichtung für den Flasch der Innendichtung,
- **Fig.** 4: die Außendichtung des Endverschlusses und die Spleißkammer und
- **Fig.** 5: eine Kolbendichtung für den Flansch der Außendichtung.

In **Fig**. 1 ist schematisch eine Ausführungsform des Endverschlusses für ein dreiadriges Starkstrom-Druckkabel dargestellt. Der Drucksicherungsraum (400) und die Spleißkammer (50) sind geöffnet gezeichnet, um das Innere sichtbar zu machen. Das Druckkabel (unter Öl- oder Gasdruck) wird von einem Druckführungsrohr (10) umgeben, welches in einem Aufteilungsgehäuse (12) endet. Das Aufteilungsgehäuse (12), das sich auf einem Schutzpotential von etwa -2 Volt befindet, wird von Isolierstützen (11) an einem Endverschlußtraggestell (8) gehalten. Das Aufteilungsgehäuse (12) setzt sich in vier fingerförmigen Rohren fort, von denen drei je eine Ader des Druckkabels in Aufteilungsrohren (13', 13'',13''') führen und das vierte den Stutzen (20) zur Befestigung zweier Leitungsdurchführungen (28,31) in einer Abschlußplatte (27) bildet.

Jedes Aufteilungsrohr (13',13'',13''') und der Stutzen (20) enden in einem Flansch (14',14'',14''',22). Flansch (22) und Abschlußplatte am Stutzen (20) sind ein gegen Öl- oder Gasübertritt drucksicherer Abschluß des Aufteilungsgehäuses (12). Im oberen Teil des Stutzens ist eine gewendelte Anordnung einer Leitung (32) angedeutet. Der oberen Teil des Stutzens bildet für die Leitung eine Aufspannkammer (4) für Leitungsmehrlänge.

In **Fig**. 1 sind oberhalb und unterhalb der Abschlußplatte (27) gewendelte Leitungen (32',32) angedeutet. Damit sollen beide Alternativen der Anordnung einer Aufspannkammer (4,40) für die Aufnahme von Überlänge der Leitungen (32',32) dargestellt werden. Im allgemeinen reicht eine Aufspannkammer in einem Endverschluß aus. Oberhalb des Flansches (22) wird in einem zylindrischen Bogenrohr mit 90-Grad-Verlauf ein Drucksicherungsraum (400) gebildet.

Nachrichtenleitungen werden in Druckkabeln in Mänteln verlegt, die in den Zwickeln zwischen den Leitern des Kabels liegen. Die Mänteln zum Schutz der Adern der Leitung können aus Kunststoff oder metallisch ausgebildet sein. Metallmäntel haben den Vorteil, daß sie den umschließenden Hohlraum sicher und langdauernd gegen den herrschenden Druck abschließen, so daß die Adern auf Atmosphärendruck liegen können. Weiterhin haben metallgemantelte Leitungen den Vorteil hoher Korrosionsbeständigkeit und guter mechanischer Festigkeit. Für Lichtwellenleiter werden Edelstahlröhrchen als Mäntel bevorzugt.

Beide Leitungen (32',32) sind durch die erste Abschlußplatte (27) und durch die zweite Abschlußplatte (44) in je einer Leitungsdurchführung druckdicht hindurchgeführt. Es wird Dichtigkeit bezüglich Druckgas (Stickstoff) bis zu einem Gasdruck von etwa 20 bar gefordert. Die Wandung (41) des Drucksicherungsraums (400) ist ebenfalls auf den maximal zulässigen Druck des Druckkabels ausgelegt. Dadurch wird sichergestellt, daß zwar Druckmedium (Gas oder Öl) durch eine Undichtigkeit im Bereich der ersten Abschlußplatte (27), im Mantel der Leitung (32), im Flansch (22) oder in der Dichtung der ersten Leitungsdurchführung (28,31) in den Drucksicherungsraum (400) eintreten kann, das Druckmedium jedoch aus diesem Raum nicht nach außen entweichen kann. Zur Kontrolle des Druckes kann ein Druck- oder ölsensor (38) in der Wandung (41) des Drucksicherungsraums (400) vorgesehen werden.

Der Drucksicherungsraum (400) ist mit einer zweiten Abschlußplatte (44) geschlossen, durch die die Leitungen in eine Spleißkammer (50) gelangen. In den Leitungsdurchführungen (33',33) - deren verschiedene mögliche Ausführungen in **Fig**. 3 und **Fig**. 5 noch erläutert werden - sind abgemantelte Lichtleitfasern (34', 34'',34''') aufgefächert. Die heraustretenden Lichtleitfasern werden einzeln zum Spleißträger (52) geführt, wo sie an eine nach außenführende optische Leitung (340) gespleißt sind. Die Leitung (340) wird durch ein Rohr aus Kunststoff (54) zu einer nicht dargestellten Haubenmuffe geführt. Das Gehäuse des Drucksicherungsraums (400) und der Speißkammer (50) ist metallisch ausgeführt und elektrisch auf Schutzpotential des Aufteilungsgehäuses (12) gehalten. Das Rohr (54) ist elektrisch nichtleitend.

Die Spleißkammer (50) ist mit einem Deckel (58) und O-Ring (36') gegen Feuchtigkeitszutritt verschlossen. Die Leitung (340) ist im Rohr (54) ebenfalls feuchtigkeitsdicht eingebracht oder das Rohr (54) ist feuchtigkeitsdicht in der nicht dargestellten Haubenmuffe abgedichtet, womit sichergestellt ist, daß das Innere der Spleißkammer (50) von Umwelteinflüssen (insbesondere Feuchtigkeit) geschützt ist. Die Anforderung nach Überdrucksicherheit auch für die Spleißkammer (50) kann realisiert werden.

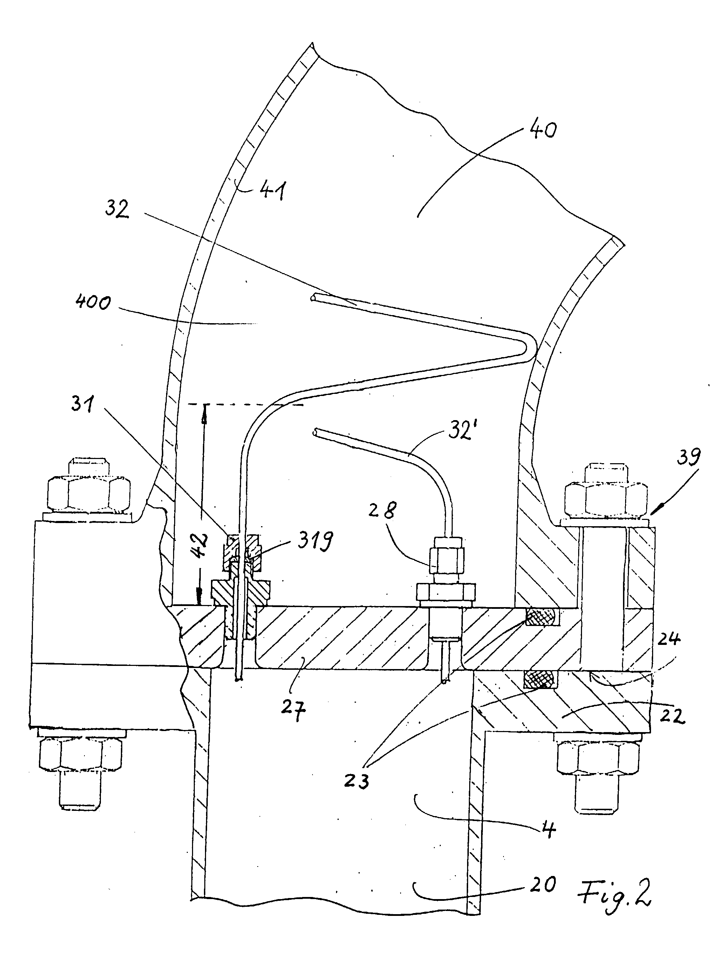

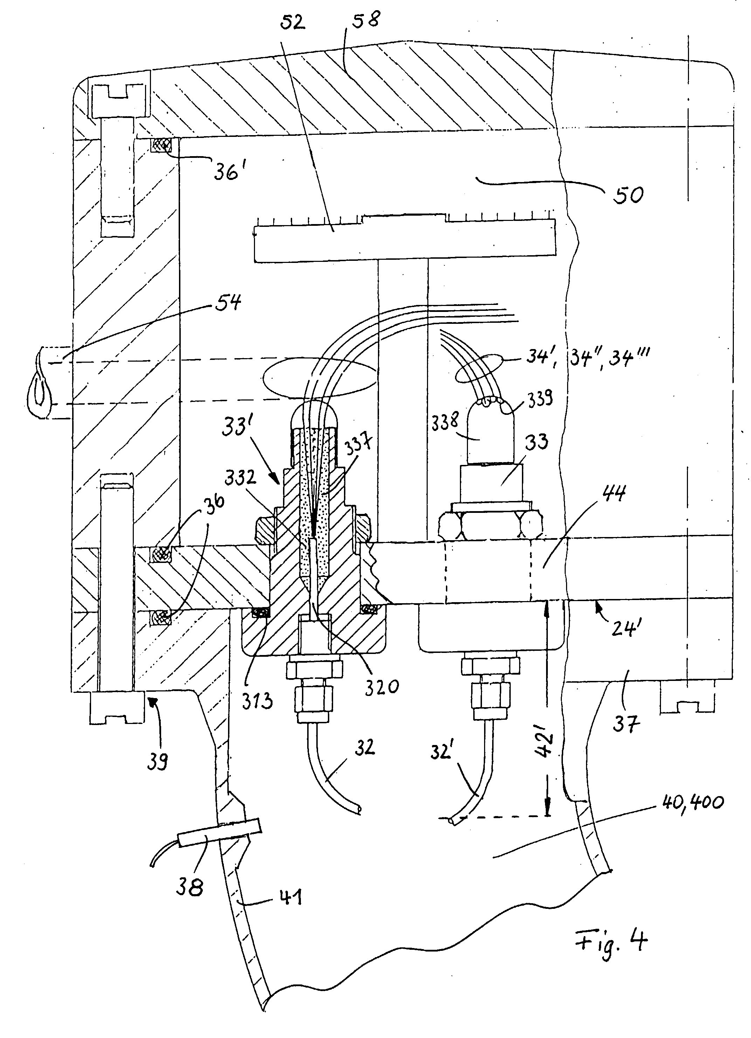

**Fig.** 2 und **Fig.** 4 zeigen Unter- und Oberteil einer gekrümmten, zylindrischen Aufspannkammer (40), bzw. Drucksicherungsraum (400) und die jeweiligen Leitungsdurchführungen (28,31,33,33') in den beiden Abschlußplatten (27,44). Die Aufspannkammer (40) bzw. der Drucksicherungsraum (400) kann jedoch auch je nach Platzverhältnisse als gerades Rohr mit eckigem Querschnitt ausgeführt sein.

**Fig.** 2 zeigt die Innendichtung durch den Flansch (22), auf dessen Paßfläche (24) die erste Abschlußplatte (27) mittels Verschraubung (39) befestigt ist. Die Dichtung wird durch O-Ringe (23) hergestellt. Eine Leitungsdurchführung (31) ist geschnitten dargestellt. Sie ist als Stopfbuchse - wie sie auch für Themoelementdurchführungen benutzt werden - ausgeführt. Eine Dichtungsscheibe (319) wird von einer Schraubkappe gegen den Mantel der Leitung (32) gepreßt und dichtet gegen den Leitungsmantel. Das Herausführen der Leitungen (32',32) aus den Leitungsdurchführungen (28, 31,33,33') verlangt eine gewisse Strecke der Geradführung der Leitung (32',32), um der Gefahr des Knickens vorzubeugen. Nach der Geradführung schließt sich eine schraubenförmige Anordnung der Leitung in der Aufspannkammer (40) an.

Die die Abschlußplatte (27,44) überragende Baulänge der Leitungsdurchführung (28,31,33,33'), die Länge der Geradführung der Leitung hinter der Leitungsdurchführung und der erste Viertelbogen der Leitung wird als Sicherheitslänge (42) definiert. Das Doppelte der Sicherheitslänge plus die Stapelhöhe für die Windungen der geschraubten Leitung bestimmen Geometrie und Volumen der Aufspannkammer (40).

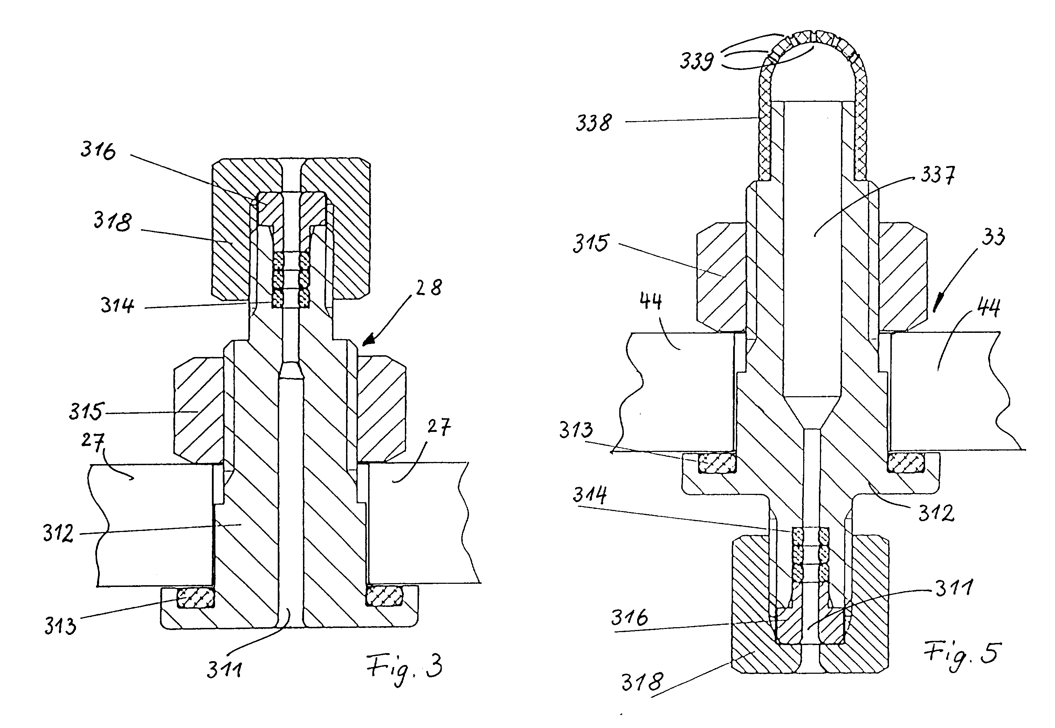

**Fig.** 3 zeigt eine Kolbendichtung (28), wie sie für die Abschlußplatte (27) der Innendichtung einsetzbar ist. Durch die zentrale Bohrung (311) wird die Leitung (32) in der gesamten Länge durch die Kolbendichtung geführt. Die Kolbendichtung ist mit einer Mutter (315) in einer Bohrung in der Abschlußplatte (27) mit Rundgummidichtungen (313) festgesetzt. Das obere Ende der Kolbendichtung wird mit einer Schraubkappe (318) verschlossen. Diese drückt auf einen konischen Druckring (316), der wiederum die Dichtung gegen den Mantel (320) der Leitung (32) mit mehreren Rundgummidichtungen (314) bewirkt.

In **Fig**. 4 sind der obere Teil der Aufspannkammer (40), die Außendichtung und die Spleißkammer (50) dargestellt. Die Leitungen (32',32) werden - aus der Aufspannkammer (40) kommend - durch die Leitungsdurchführungen (33,33') geführt. Die Leitungsdurchführungen (33,33') sitzen in der äußeren Abschlußplatte (44) mit Paßfläche (24') für den Flansch (37). Die Abschlußplatte (44) ist mit O-Ringen (36) gedichtet. Eine der Leitungsdurchführungen (33') ist im Schnitt gezeigt. Auf der äußeren Abschlußplatte (44) ist axial ein Spleißträger (52) befestigt. Die Spleißkammer (50) ist mit einem Deckel (58) verschlossen, der mit einem O-Ring (36') gedichtet wird. Durch die Wand der vorzugsweise zylindrisch ausgeführten Spleißkammer (50) führt ein Rohr (54), durch das - in der **Fig.** 4 nicht dargestellt - die Leitung (340) in Einzeladern (Lichtleitfasern) oder als Leiterbündel nach außen führbar ist.

**Fig**. 5 zeigt eine Kolbendichtung (33) für den Einbau in die äußere Abschlußplatte (44). Der äußere Aufbau und die Befestigung der Kolbendichtung (33) entspricht der Kolbendichtung (28) nach **Fig**. 3. Identische Teile beider Kolbendichtungen (28,33) sind mit identischen Bezugszeichen gekennzeichnet. Die Kolbendichtung (33) ist für die Halterung von Leitungen (32) vorgesehen, deren Mantel (320) in der Leitungsdurchführung fixiert werden soll. Das besondere Merkmal der Kolbendichtung (33) besteht in einem zylindrischen, in der Achse der Leitungsdurchführung liegenden Auffächerraum (337), in dem die Lichtleitfasern (34',34'',34''') mit Gießharz (332) fixierbar sind. Hierzu werden die Lichtleitfasern aufgefächert und Gießharz eingefüllt. Die Situation ist in **Fig**. 4 dargestellt. Die innere Wandung des Auffächerraums (337) kann beispielsweise durch Aufrauhung oder durch Rillen so gestaltet sein, daß das Gießharz besonders gut haftet und abdichtet. Damit läßt sich eine Erhöhung der Druckdichtigkeit auf Werte des Drucks des Druckmediums (Stickstoff) im Druckführungsrohr (10) erreichen. Die fixierten Lichtleitfasern (34',34'',34''') verlassen die Kolbendichtung (33) durch Öffnungen (339) in der Kappe (338). Von dort werden sie zum Spleißträger (52) geführt.

## Patentansprüche

1. Endverschluß für ein Druckkabel, in dem neben mindestens einem Energieleiter eine weitere Leitung (**34**) - insbesondere Nachrichtenleitung - mitgeführt wird, mit mindestens einer gasdichten Leitungsdurchführung (**28,31**) für mitgeführte Leitungen (**34**), mit Druckführungsrohr (**10**) und Aufteilungsgehäuse (**12**) und Öl oder Gas als Druckmedium, wobei das Aufteilungsgehäuse (**12**) mit wenigestens einem Stutzen (**20**) zur Befestigung von Leitungsdurchführungen (**28,31**) versehen ist und außerhalb der erstgenannten Leitungsdurchführungen (**28,31**) eine als Drucksicherungsraum (**400**) bezeichnete Kammer vorhanden ist, in deren Wandung (**41**) mindestens eine zweite Leitungsdurchführung (**33, 33'**) angeordnet ist, die druckfest und dicht gegen Durchtritt des Druckmediums ist, **dadurch gekennzeichnet**, daß die Wandung (**41**) des Drucksicherungsraums (**400**) durch den Stutzen (**20**) gebildet ist.

2. Endverschluß nach Anspruch 1, **dadurch gekennzeichnet**, daß die Leitungsdurchführungen (**28,31,33, 33'**) als Kolbendichtung (**28,33**) und/oder Stopfbuchse (**31**) ausgebildet sind.

3. Endverschluß nach einem der vorhergehenden Ansprüche, **dadurch gekennzeichnet,** daß die zweiten Leitungsdurchführungen (**33,33'**) für das Haltern einer gemantelten Leitung (**32,32'**) ausgebildet sind, deren Mantel (**320**) in ihnen endet.

4. Endverschluß nach einem der Ansprüche 1 oder 2, **dadurch gekennzeichnet,** daß die zweite Leitungsdurchführungen (**33,33'**) für das Haltern von freigelegten Adern (**34**,**34**') von Leitungen (**32**, **32'**) ausgebildet sind.

5. Endverschluß nach einem der Ansprüche 1 bis 3, **dadurch gekennzeichnet,** daß die zweiten Leitungsdurchführungen (**33,33'**) eingangsseitig zum Haltern einer gemantelten Leitung (**32,32'**) ausgebildet sind und sie ausgangsseitig mit einem länglich ausgebildeten Raum (**337**) versehen sind, der mit einer Masse (**332**) zum Fixieren von freigelegten Adern (**34,34'**) füllbar ist.

6. Endverschluß nach einem der vorhergehenden Ansprüche, **dadurch gekennzeichnet,** daß die ersten Leitungsdurchführungen (**28,31**) einstückig mit dem Stutzen (**20**) ausgebildet sind.

7. Endverschluß nach einem der Ansprüche 1 bis 6, **dadurch gekennzeichnet,** daß die ersten Leitungsdurchführungen (**31,31'**) am Stutzen (**20**) auswechselbar befestigt sind.

8. Endverschluß nach einem der vorhergehenden Ansprüche, **dadurch gekennzeichnet**, daß im Drucksicherungsraum (**400**) ein stoff- oder druckempfindliches Meßelement (**38**) eingebracht ist.

9. Endverschluß nach einem der vorhergehenden Ansprüche, **dadurch gekennzeichnet**, daß ein als Aufspannkammer bezeichneter Raum (**4**) für die Unterbringung einer Mehrlänge und/oder von Spleißen von Leitungen (**32,32'**) vor der ersten Leitungsdurchführung (**28,31**) vorhanden ist.

10. Endverschluß nach einem der Ansprüche 1 bis 8, **dadurch gekennzeichnet**, daß ein als Aufspannkammer bezeichneter Raum (**40**) für die Unterbringung einer Mehrlänge und/oder von Spleißen von Leitungen (**32,32'**) gemeinsam mit dem Drucksicherungsraum (**400**) ausgebildet ist.

11. Endverschluß nach einem der Ansprüche 1 bis 8 oder 10, **dadurch gekennzeichnet**, daß sich ein als Spleißkammer bezeichneter Raum (**50**) für die Unterbringung einer Mehrlänge und/oder von Spleißen von Leitungen (**32,32'**) außerhalb des Drucksicherungsraums (**400**) befindet, daß die Adern (**34',34'',34'''**) von Leitungen (**32, 32'**) und/oder weitergeführte Adern durch ein isolierendes Rohr (**54**) aus der Spleißkammer (**50**) nach außen führbar sind und die Spleißkammer (**50**) und das isolierende Rohr (**54**) gegen Umwelteinflüsse abgedichtet sind.

12. Endverschluß nach einem der Ansprüche 9 bis 11, **dadurch gekennzeichnet**, daß das Volumen der Aufspannkammer (**4,40**) oder der Spleißkammer (**50**) geometrisch durch die Baulänge der Leitungsdurchführungen (**28,31,33,33'**), durch an den Enden der Leitungsdurchführungen erforderlichen Sicherheitslängen (**42,42'**) und durch den Vorrat an Leitungsmehrlänge bestimmt ist.

13. Endverschluß nach einem der Ansprüche 9 bis 12, **dadurch gekennzeichnet**, daß die Aufspannkammer (**4,40**) und/oder die Spleißkammer (**50**) zylindrisch ausgebildet ist.

14. Endverschluß nach einem der vorhergehenden Ansprüche, **dadurch gekennzeichnet**, daß die Außenflächen des Drucksicherungsraums (**400**), die der Aufspannkammer (**4,40**) und die der Spleißkammer (**50**) elektrisch leitend ausgebildet sind und daß sie elektrisch mit dem Schutzpotential des Aufteilungsgehäuses (**12**) verbindbar sind.

15. Endverschluß nach einem der vorhergehenden Ansprüche, **dadurch gekennzeichnet**, daß der Drucksicherungsraum (**400**), die Aufspannkammer (**4,40**) und/oder die Spleißkammer (**50**) ganzmetallisch sind.

16. Endverschluß nach einem der vorhergehenden Ansprüche, **dadurch gekennzeichnet**, daß ein metallischer Mantel (**320**) einer Leitung (**32,32'**) vermittels der zweiten Leitungsdurchführung (**33,33'**) mit dem Schutzpotential des Aufteilungsgehäuses (**12**) verbindbar ist.

## Claims

1. A sealed end for a pressure cable, in which a further line (34) - in particular an information line - is carried in addition to at least one energy conductor, having at least one gas-tight line duct (28, 31) for jointly carried lines (34), with a pressure-supplying tube (10) and a distribution housing (12) and oil or gas as the pressure medium, wherein the distribution housing (12) is provided with at least one socket (20) for fastening line ducts (28, 31) and a chamber referred to as a pressure-safeguarding space (400) is present outside the first-named line ducts (28, 31), and at least one second line duct (33, 33'), which is pressure-resistant and sealed tight to prevent the passage of the pressure medium, is arranged in the wall (41) of the said pressure-safeguarding space (400), **characterized in that** the wall (41) of the pressure-safeguarding space (400) is formed by the socket (20).

2. A sealed end according to Claim 1, **characterized in that** the line ducts (28, 31, 33, 33') are constructed as a piston packing (28, 33) and/or a stuffing box (31).

3. A sealed end according to one of the preceding Claims, **characterized in that** the second line ducts (33, 33') are constructed for mounting an encased line (32, 32'), the casing (320) of which terminates therein.

4. A sealed end according to one of Claims 1 or 2, **characterized in that** the second line ducts (33, 33') are constructed for mounting bared leads (34, 34') of lines (32, 32').

5. A sealed end according to one of Claims 1 to 3, **characterized in that** the second line ducts (33, 33') are constructed on the one hand for mounting an encased line (32, 32') and they are provided at the outlet end with an elongate space (337) which can be filled with a compound (332) for fixing bared leads (34, 34').

6. A sealed end according to one of the preceding Claims, **characterized in that** the first line ducts (28,31) and the socket (20) are made in one piece.

7. A sealed end according to one of Claims 1 to 6 [*sic*], **characterized in that** the first line ducts (31, 31') are secured interchangeably to the socket (20).

8. A sealed end according to one of the preceding Claims, **characterized in that** a measuring element (38) sensitive to material or pressure is fitted in the pwmm-sateguarding space (400).

9. A sealed end according to one of the preceding Claims, **characterized in that** a space (4) referred to as a holding chamber for receiving an extra length and/or splicings of lines (32, 32') is provided in front of a first line duct (28, 31).

10. A sealed end according to one of Claims 1 to 8, **characterized in that** a space (4) referred to as a holding chamber for receiving an extra length and/or splicings of lines (32, 32') is constructed jointly with the pressure-safeguarding space (400).

11. A sealed end according to one of Claims 1 to 8 or 10, **characterized in that** a space (50) referred to as a splicing chamber for receiving an extra length and/or splicings of lines (32, 32') is provided outside the pressure-safeguarding space (400), the leads (34', 34", 34"') of lines (32, 32') and/or continued leads can be led out of the splicing chamber (50) towards the outside by an insulating tube (54), and the splicing chamber (50) and the insulating tube (54) are sealed off from environmental action.

12. A sealed end according to one of Claims 9 to 11, **characterized in that** the volume of the holding chamber (4, 40) or the splicing chamber (50) is determined geometrically by the structural length of the line ducts (28, 31, 33, 33'), by safety lengths (42, 42') required at the ends of the line ducts, and by the store of extra length of line.

13. A sealed end according to one of Claims 9 to 12, **characterized in that** the holding chamber (4, 40) and/lor the splicing chamber (50) is made cylindrical.

14. A sealed end according to one of the preceding Claims, **characterized in that** the outer faces of the pressure-safeguarding space (400), those of the holding chamber (4, 40) and those of the splicing chamber (50) are made electrically conductive, and they can be connected electrically to the protective potential of the distribution housing (12).

15. A sealed end according to one of the preceding Claims, **characterized in that** the pressure-safeguarding space (400), the holding chamber (4, 40) and/or the splicing chamber (50) are all-metal.

16. A sealed end according to one of the preceding Claims, **characterized in that** a metallic casing (320) of a line (32, 32') can be connected to the protective portential of the distribution housing (12) by means of the second line duct (33, 33').

## Revendications

1. Boîte d'extrémité pour câble sous pression, dans laquelle se met en place outre un conducteur d'énergie un autre conducteur (**34**), en particulier pour acheminer des informations, avec au moins un passage de câble hermétique au gaz (**28**, **31**) pour conducteurs (**34**), avec tube de mise sous pression (**10**) et chambre de dérivation (**12**) utilisant de l'huile ou du gaz comme médium de pression, la chambre de dérivation (**12**) disposant d'au moins un manchon (**20**) pour fixation des passages de câble (**28, 31**), et, extérieurement aux passages de câble cités en premier (**28, 31**), d'une chambre appelée chambre de contrôle de pression (**400**) dont la paroi (**41**) comporte au moins un second passage de câble (**33, 33'**), résistant à la pression et hermétique au médium de mise sous pression, **caractérisé en ce que** la paroi (**41**) de la chambre de contrôle de pression (**400**) est constituée elle-même par le manchon (**20**).

2. Boîte d'extrémité suivant la revendication 1, **caractérisée en ce que** les passages de câble (**28, 31, 33, 33'**) sont réalisés en joint à piston (**28,33**) et/ou en presse-étoupe (**31**).

3. Boîte d'extrémité suivant l'une des revendications précédentes, caractérisée en ce que les seconds passages de câble (**33, 33'**) sont conçus pour maintenir un câble à gaine de blindage (**32, 32'**) dont le blindage (**320**) se termine dans les passages de câble.

4. Boîte d'extrémité suivant l'une des revendications 1 ou 2, caractérisée en ce que les seconds passages de câble (**33, 33'**) sont conçus pour le maintien de conducteurs dénudés (**34, 34'**) appartenant aux câbles (**32, 32'**).

5. Boîte d'extrémité suivant l'une des revendications 1 à 3, caractérisée en ce que les seconds passages de câble (**33, 33'**) sont conçus du côté entrée pour maintenir un câble à gaine de blindage (**32**, **32'**) et sont munis côté sortie d'une chambre longitudinale (**337**) pouvant être remplie avec une masse maintenant des conducteurs dénudés (**34**, **34'**).

6. Boîte d'extrémité suivant l'une des revendications précédentes, **caractérisée en ce que** les premiers passages de câble (**28, 31**) sont conçus en monobloc avec le manchon (**20**).

7. Boîte d'extrémité suivant l'une des revendications 1 à 6, **caractérisée en ce que** les premiers passages de câble (**31, 31'**) sont montés de manière amovible sur le manchon (**20**).

8. Boîte d'extrémité suivant l'une des revendications précédentes, **caractérisée en ce que** dans la chambre de contrôle de pression (**400**), on a placé un capteur sensible à médium ou à pression (**38**).

9. Boîte d'extrémité suivant l'une des revendications précédentes, **caractérisée en ce qu**'il existe en avant du premier passage de câble (**28, 31**) une chambre (**4**) appelée chambre de déploiement, destinée au rangement d'une longueur en trop et/ou à la réalisation d'épissures sur câbles (**32, 32'**).

10. Boîte d'extrémité suivant l'une des revendications 1 à 8, **caractérisée en ce qu'**une chambre appelée chambre de déploiement (**40**) destinée au rangement d'une longueur en trop et/ou à la réalisation d'épissures sur les câbles (**32, 32'**) est conçue comme élément combiné avec la chambre de contrôle de pression (**400**).

11. Boîte d'extrémité suivant l'une des revendications 1 à 8 ou 10, **caractérisée en ce qu**'un espace appelé chambre d'épissures (**50**), destiné à loger un excès de longueur ou à la réalisation d'épissures pour les câbles (**32, 32'**), se trouve à l'extérieur de la chambre de contrôle de pression (**400**), que les conducteurs (**34', 34",34"'**) des câbles (**32, 32'**) et/ou d'autres conducteurs les accompagnant soient conduits à l'extérieur de la chambre d'épissures (**50**) par un tube isolant (**54**) et que la chambre d'épissures (**50**) et le tube isolant (**54**) soient étanchéifiés contre l'environnement.

12. Boîte d'extrémité suivant l'une des revendications 9 à 11, **caractérisée en ce que** le volume de la chambre de déploiement (**4, 40**) ou de la chambre d'épissures (**50**) est déterminé géométriquement par les cotes constructives des passages de câble (**28, 31, 33, 33'**), par les marges de sécurité nécessaires en bout de passages de câbles (**42, 42'**) et par la réserve de longueur en surplus.

13. Boîte d'extrémité suivant l'une des revendications 9 à 12, **caractérisée en ce que** la chambre de déploiement (**4, 40**) et/ou la chambre d'épissures (**50**) ont une forme cylindrique.

14. Boîte d'extrémité suivant l'une des revendications précédentes, **caractérisée en ce que** les parois extérieures de la chambre de contrôle de pression (**400**), celles de la chambre de déploiement (**4, 40**) et celles de la chambre d'épissures (**50**) sont conçues pour conduire l'électricité et peuvent être électriquement connectées au potentiel de protection de la chambre de dérivation (**12**).

15. Boîte d'extrémité suivant l'une des revendications précédentes **caractérisée en ce que** la chambre de contrôle de pression (**400**) , la chambre de déploiement (**4, 40**) et/ou la chambre d'épissures (**50**) sont entièrement en métal.

16. Boîte d'extrémité suivant l'une des revendications précédentes **caractérisée en ce qu**'un blindage métallique (**320**) d'un câble (**32, 32'**) peut être relié par le second passage de câble (**33, 33'**) avec le potentiel de protection de la chambre de dérivation (**12**).
